# EUROPEAN PATENT APPLICATION

(11) **EP 4 116 933 A1**
(43) Date of publication of application: **11.01.2023**
(21) Application number: 21765024.1
(22) Date of filing: 26.01.2021
(51) Int. Cl.: G06T 15/04, G01N 21/84

(54) **THREE-DIMENSIONAL DISPLAY DEVICE, METHOD, AND PROGRAM**

(30) Priority: 03.03.2020 JP 2020035609
(71) Applicant: FUJIFILM Corporation, Tokyo 106-8620 (JP)
(72) Inventor: KIKUCHI, Hiroaki, Tokyo 106-8620 (JP)
(74) Representative: Parker, Andrew James
(86) International application number: PCT/JP2021/002685
(87) International publication number: WO 2021/176891

(57) **Abstract**

There are provided a three-dimensional display device, a three-dimensional display method, and a three-dimensional display program that can facilitate checking of, for example, damage information of each of the members that constitute a construction, with a three-dimensional model of the construction displayed on a display. A CPU 20 that functions as a processor of a three-dimensional display device 10 maps pieces of damage information stored in a storage unit 16 and associated with members of a construction onto members, on a three-dimensional model stored in the storage unit 16, corresponding to the pieces of damage information. When accepting an instruction for displaying an inspection target member of the construction from an operation unit 18, the CPU 20 creates a three-dimensional model of only the member for which the instruction for displaying is accepted and onto which a piece of damage information is mapped and causes a display unit 30 to display the three-dimensional model.

## Description

### BACKGROUND OF THE INVENTION

### 1. Field of the Invention

The present invention relates to a three-dimensional display device, a three-dimensional display method, and a three-dimensional display program and specifically relates to a technique for displaying a three-dimensional model of a construction on a display.

### 2. Description of the Related Art

Social infrastructure constructions, such as bridges, need to be regularly inspected for maintenance and repair.

Recently, a technique in which a large number of images of, for example, a bridge at a high place having difficulty in access are captured with, for example, a drone or a robot in which a camera is mounted, such that images are partially overlap, a three-dimensional point cloud is generated by using SfM (Structure from Motion), and a three-dimensional model of the construction based on the three-dimensional point cloud is generated is increasingly used.

WO2019/198562A discloses a technique in which damage (damage diagram) detected by analyzing captured images of a construction is mapped onto the surface of a three-dimensional model of the construction generated by using SfM and the three-dimensional model onto which the damage diagram is mapped is displayed on a display unit.

### SUMMARY OF THE INVENTION

WO2019/198562A does not specifically describe the method for displaying, on the display unit, the three-dimensional model onto which the damage diagram is mapped.

Inspection of a construction is conducted for each of the management segments that are segments of inspection units of parts and members that constitute the construction and, for example, the degree of damage is evaluated and the properties of the external appearance are recorded for each management segment in accordance with inspection and evaluation criteria specified by, for example, the government or the local government.

When a user wants to have a three-dimensional model displayed on a display and check a specific member that constitutes the construction and damage to the member, display of the three-dimensional model has a problem that unwanted information other than the information that the user wants to check is displayed and that a portion of the specific member is hidden behind another member and is difficult to be viewed.

The present invention has been made in view of the above-described circumstances, and an object thereof is to provide a three-dimensional display device, a three-dimensional display method, and a three-dimensional display program that can facilitate checking of, for example, damage information of each of the members that constitute a construction, with a three-dimensional model of the construction displayed on a display.

To achieve the above-described object, a first aspect of the present invention is a three-dimensional display device including: a processor; and a memory configured to store a three-dimensional model of a construction and pieces of damage information associated with members of the construction, the processor being configured to map the pieces of damage information stored in the memory onto members, on the three-dimensional model stored in the memory, corresponding to the pieces of damage information, accept from a user interface, an instruction for displaying or hiding a member of the construction, and cause, when accepting an instruction for displaying an inspection target member of the construction from the user interface, a display to display the three-dimensional model of only the member for which the instruction for displaying is accepted and onto which a piece of damage information is mapped, or cause, when accepting an instruction for hiding a desired member of the construction from the user interface, the display to display the three-dimensional model of a member of the construction, onto which a piece of damage information is mapped, except the member for which the instruction for hiding is accepted.

According to the first aspect of the present invention, the processor performs a damage information mapping process of mapping the pieces of damage information associated with members of the construction onto members, on the three-dimensional model of the construction, corresponding to the pieces of damage information. When accepting an instruction for displaying an inspection target member of the construction from the user interface, the processor causes the display to display the three-dimensional model of only the member for which the instruction for displaying is accepted and onto which the piece of damage information is mapped, and when accepting an instruction for hiding a desired member of the construction from the user interface, the processor causes the display to display the three-dimensional model of a member of the construction, onto which the piece of damage information is mapped, except the member for which the instruction for hiding is accepted.

Accordingly, on the display that displays the three-dimensional model of the member onto which the piece of damage information is mapped, unwanted information other than information that the user wants to check is not displayed or the member for which the instruction for hiding is accepted is removed, and the user can easily check, for example, the piece of damage information of the desired member that constitutes the construction.

Preferably, in the three-dimensional display device according to a second aspect of the present invention, the three-dimensional model is a three-dimensional point cloud model, a three-dimensional polygon model created on the basis of the three-dimensional point cloud model, or a three-dimensional model obtained by texture mapping in which images obtained by image capturing of the construction are mapped onto polygons of the three-dimensional polygon model.

Preferably, in the three-dimensional display device according to a third aspect of the present invention, the processor is configured to recognize members that constitute the construction on the basis of the three-dimensional model.

Preferably, in the three-dimensional display device according to a fourth aspect of the present invention, the memory is configured to store a table that shows relationships between members of the construction and damage that is likely to occur in the members, and the processor is configured to specify, when accepting from the user interface, selection of a type of damage among a plurality of types of damage to the construction, a member corresponding to the selected type of damage with reference to the table, and accept display of the specified member.

Accordingly, when the user selects a type of damage that the user wants to check, a member corresponding to the selected type of damage is specified by the processor, and the three-dimensional model of only the specified member (that is, the member onto which a piece of damage information corresponding to the type of damage that the user wants to check is mapped) can be displayed.

Preferably, in the three-dimensional display device according to a fifth aspect of the present invention, the processor is configured to cause the display to display the three-dimensional model of the members onto which the pieces of damage information are mapped, and to accept an instruction for displaying an inspection target member of the construction or an instruction for hiding a desired member of the construction, the inspection target member and the desired member being specified with a pointing device on the display on which the three-dimensional model is displayed.

Accordingly, the user can give an instruction for displaying an inspection target member that is an inspection target of the construction or give an instruction for hiding a desired member of the construction, while viewing the three-dimensional model displayed on the display.

Preferably, in the three-dimensional display device according to a sixth aspect of the present invention, the processor is configured to cause, when accepting the instruction for displaying the inspection target member of the construction from the user interface, the display to display the three-dimensional model while making a line-of-sight direction coincide with a direction normal to a surface of the member.
Accordingly, the user can visually recognize the surface of the inspection target member of the construction from the front and can grasp the piece of damage information mapped onto the surface of the member more accurately.

Preferably, in the three-dimensional display device according to a seventh aspect of the present invention, each of the pieces of damage information is a damage diagram showing a position or a region of damage.

In the three-dimensional display device according to an eighth aspect of the present invention, damage to a concrete member of the construction includes at least one of a crack, peeling/exposure of reinforcing rods, or water leakage/free lime, and damage to a steel member of the construction includes at least one of corrosion, a fracture, or a rupture.

A ninth aspect of the present invention is a three-dimensional display method for a processor to cause a display to display a three-dimensional model of a construction, processes to be performed by the processor including: a step of obtaining from a memory configured to store the three-dimensional model of the construction and pieces of damage information associated with members of the construction, the three-dimensional model and the pieces of damage information; a step of mapping the obtained pieces of damage information onto members, on the three-dimensional model, corresponding to the pieces of damage information; a step of accepting from a user interface, an instruction for displaying or hiding a member of the construction; and a step of causing, when accepting an instruction for displaying an inspection target member of the construction from the user interface, the display to display the three-dimensional model of only the member for which the instruction for displaying is accepted and onto which a piece of damage information is mapped, or causing, when accepting an instruction for hiding a desired member of the construction from the user interface, the display to display the three-dimensional model of a member of the construction, onto which a piece of damage information is mapped, except the member for which the instruction for hiding is accepted.

A tenth aspect of the present invention is a three-dimensional display program for causing a computer to perform a three-dimensional display method for displaying a three-dimensional model of a construction on a display, the three-dimensional display method including: a step of obtaining from a memory configured to store the three-dimensional model of the construction and pieces of damage information associated with members of the construction, the three-dimensional model and the pieces of damage information; a step of mapping the obtained pieces of damage information onto members, on the three-dimensional model, corresponding to the pieces of damage information; a step of accepting from a user interface, an instruction for displaying or hiding a member of the construction; and a step of causing, when accepting an instruction for displaying an inspection target member of the construction from the user interface, the display to display the three-dimensional model of only the member for which the instruction for displaying is accepted and onto which a piece of damage information is mapped, or causing, when accepting an instruction for hiding a desired member of the construction from the user interface, the display to display the three-dimensional model of a member of the construction, onto which a piece of damage information is mapped, except the member for which the instruction for hiding is accepted.

Accordingly, the present invention can facilitate checking of, for example, damage information of each of the members that constitute a construction, with a three-dimensional model of the construction displayed on a display.

### BRIEF DESCRIPTION OF THE DRAWINGS

Fig. 1 is a block diagram illustrating an example hardware configuration of a three-dimensional display device according to the present invention;
Fig. 2 is a diagram illustrating an example table that shows relationships between members of a construction and damage that is likely to occur in the members;
Fig. 3 is a diagram illustrating an example screen of a display unit that displays an entire three-dimensional model of a bridge;
Fig. 4 is a diagram illustrating an example screen of the display unit on which (a portion of) the three-dimensional model of the bridge is displayed;
Fig. 5 is a diagram illustrating a part of a flowchart of an embodiment of a three-dimensional display method according to the present invention;
Fig. 6 is a flowchart continued from the flowchart illustrated in Fig. 5;
Fig. 7 is a diagram illustrating an example screen of the display unit that displays a three-dimensional model of a floor slab onto which a damage diagram is mapped; and
Fig. 8 is a diagram illustrating an example screen of the display unit that displays the three-dimensional model of the floor slab onto which the damage diagram is mapped and which represents the surface of the construction by an aggregate of polygons.

### DESCRIPTION OF THE PREFERRED EMBODIMENTS

Hereinafter, preferred embodiments of a three-dimensional display device, a three-dimensional display method, and a three-dimensional display program according to the present invention will be described with reference to the attached drawings.

### Hardware Configuration of Three-Dimensional Display Device

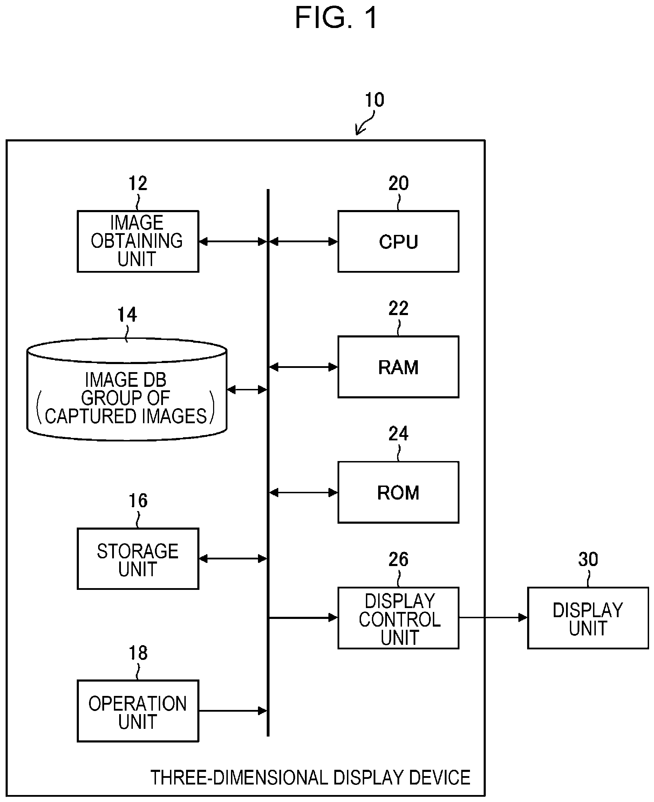

Fig. 1 is a block diagram illustrating an example hardware configuration of the three-dimensional display device according to the present invention.

As a three-dimensional display device 10 illustrated in Fig. 1, a personal computer or a workstation can be used. The three-dimensional display device 10 of this example is mainly constituted by an image obtaining unit 12, an image database 14, a storage unit 16, an operation unit 18, a CPU (central processing unit) 20, a RAM (random access memory) 22, a ROM (read-only memory) 24, and a display control unit 26. The display control unit 26 is formed of, for example, a GPU (graphic processing unit). The CPU 20 may also function as the display control unit 26.

The image obtaining unit 12 corresponds to an input/output interface and, in this example, obtains, for example, captured images obtained by image capturing of an inspection target construction. Examples of the inspection target construction include a bridge, a tunnel, and other constructions.

Images obtained by the image obtaining unit 12 are, for example, a large number of images (group of captured images) obtained by image capturing of a construction with a drone (unattended flying device) or a robot in which a camera is mounted. The group of captured images covers the entire construction, and captured images adjacent to each other preferably overlap such that the overlap is about 80% of each image.

The group of captured images obtained by the image obtaining unit 12 is stored in the image database 14.

The storage unit 16 is a memory formed of, for example, a hard disk apparatus or a flash memory and stores, for example, a three-dimensional model of the construction, damage information on a member-by-member basis associated with a member of the construction, and a table that shows relationships between members of the construction and damage that is likely to occur in the members, in addition to an operating system and the three-dimensional display program.

Here, the three-dimensional model includes a three-dimensional point cloud model obtained by extracting feature points in overlapping captured images in the group of captured images stored in the image database 14, estimating the position and attitude of the camera mounted in the drone on the basis of the extracted feature points, and simultaneously estimating the three-dimensional positions of the feature points from the results of estimation of the position and attitude of the camera.

A Structure from Motion (SfM) technique is available in which motion of a large number of feature points is tracked in the group of captured images in which the image capture position of the camera moves as the drone moves, thereby estimating the three-dimensional structure of the construction and the attitude (motion) of the camera simultaneously. Recently, an optimized calculation method called bundle adjustment has been developed, which can provide highly accurate output.

As parameters (the focal length, the image size of the image sensor, the pixel pitch, and so on) of the camera necessary for using the SfM technique, parameters stored in the storage unit 16 can be used. Although it is not possible to obtain an absolute scale with the SfM technique, an absolute scale (three-dimensional position) can be obtained by giving a known size (for example, the distance between two points) of the construction.

Here, as the three-dimensional model, a three-dimensional point cloud model represented by a three-dimensional point cloud of a large number of points on the surface of the construction, a three-dimensional polygon model representing the surface of the construction by an aggregate of polygons (for example, triangular patches) created on the basis of the three-dimensional point cloud model, or a three-dimensional model obtained by texture mapping in which images (textures) obtained by image capturing of the construction are mapped onto the polygons are possible. It is assumed that the three-dimensional model of the construction of this example is a three-dimensional model obtained by texture mapping in which the images are mapped onto the polygons of the three-dimensional polygon model.

The damage information includes a damage diagram. The damage information may include the types of damage and the degrees of damage (for example, minor or serious) shown on the damage diagram.

The damage diagram can be generated by, in a case of, for example, a concrete member, manually tracing on a captured image obtained by image capturing of the construction, damage to the concrete, such as cracks and peeling, visually recognized on the captured image or by performing image processing for automatically detecting damage from the captured image and manually making a correction as necessary.

The image processing for automatically detecting damage from the captured image can be performed by using artificial intelligence (AI).

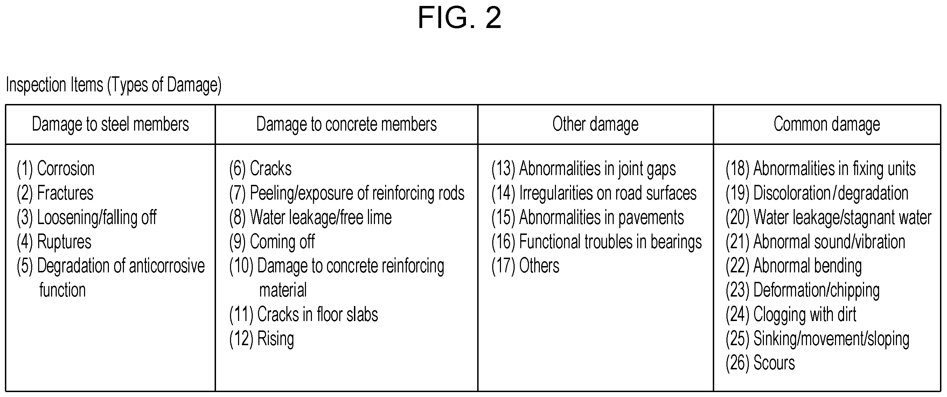

Fig. 2 is a diagram illustrating an example table that shows relationships between members of the construction and damage that is likely to occur in the members.

In the table illustrated in Fig. 2, 26 types of damage corresponding to inspection items of the construction are stored in association with members (steel members, concrete members, and so on) of the construction.

A description of an example where the construction is a bridge will be given below.

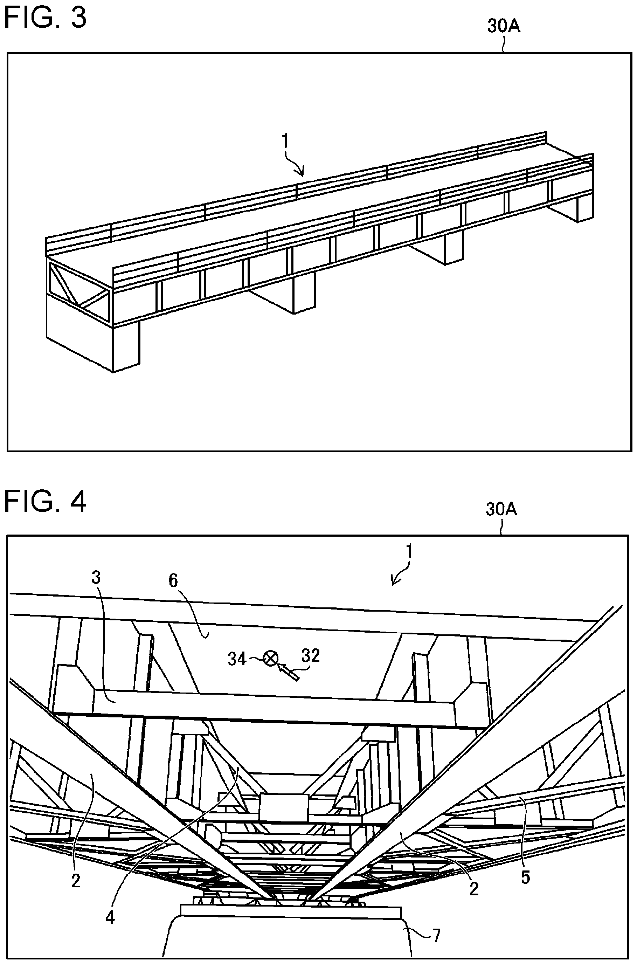

Fig. 3 is a diagram illustrating an example screen of a display unit that displays an entire three-dimensional model of a bridge, and Fig. 4 is a diagram illustrating an example screen of the display unit on which (a portion of) the three-dimensional model of the bridge is displayed.

As illustrated in Fig. 3 and Fig. 4, a bridge 1 displayed on a screen 30A of a display unit 30 is constituted by various members including main girders 2 that are laid over piers 7, cross girders 3 that are provided in a direction orthogonal to the main girders 2 and each couple the main girders 2 to each other, and sway bracing 4 and lateral bracing 5 that couple the main girders 2 to each other. Over the main girders and so on, a floor slab 6 on which vehicles and so on are traveling is formed by pouring concrete. The floor slab 6 is typically built of reinforced concrete.

The floor slab 6 is usually constituted by panels, which are basic units, having a rectangular shape and each defined by the main girders 2 and the cross girders 3, and inspection of the floor slab for damage (cracks, concrete peeling, and so on) is conducted for each panel.

Each panel of the floor slab is one of the members (inspection units) that constitute the construction (bridge). The inspection units of the bridge include segments of parts and members that constitute the construction (the main girders 2, the cross girders 3, the sway bracing 4, the lateral bracing 5, and the piers 7 (pillar parts, wall parts, beam parts, corner parts, and joint parts)) in addition to the floor slab (panels).

The operation unit 18 includes a keyboard, a mouse, and so on connected to the computer by wire or wirelessly. In this example, the operation unit 18 functions as an operation unit that accepts usual operations to be input to the computer and also functions as a user interface for giving an instruction for a view operation including operations for translating, rotating, and enlarging/reducing a three-dimensional model to be displayed on the screen of the display unit 30, for giving an instruction for displaying or hiding a member of the construction, and for giving an instruction for selecting any type of damage among a plurality of types of damage (in this example, 26 types of damage illustrated in Fig. 2) to the construction.

The CPU 20 reads various programs stored in, for example, the storage unit 16 or the ROM 24 to centrally control the units and perform various processes for displaying a three-dimensional model of the construction on the display unit 30.

The RAM 22 is used as a work area of the CPU 20 and is used as a storage unit that temporarily stores read programs and various types of data.

The display control unit 26 is a unit that creates and outputs to the display unit 30 display data for display on the display unit 30 and, in this example, displays a three-dimensional model on the display unit 30 in accordance with an instruction from the CPU 20 and, for example, translates, rotates, and enlarges/reduces the three-dimensional model on the basis of a view operation for the three-dimensional model performed by using the operation unit 18.

As the display unit 30, a variety of displays, including a liquid crystal monitor, that can be connected to the computer is used, and the display unit 30 displays a three-dimensional model on the basis of display data input from the display control unit 26 and is also used as a part of the user interface together with the operation unit 18.

A processor including the CPU 20 of the three-dimensional display device 10 thus configured reads a program stored in the storage unit 16 or the ROM 24, reads the three-dimensional model and the damage information from the storage unit 16, and executes the program to thereby display the three-dimensional model of the construction on the display unit 30 in accordance with an operation performed by using the operation unit 18.

### Three-Dimensional Display Method

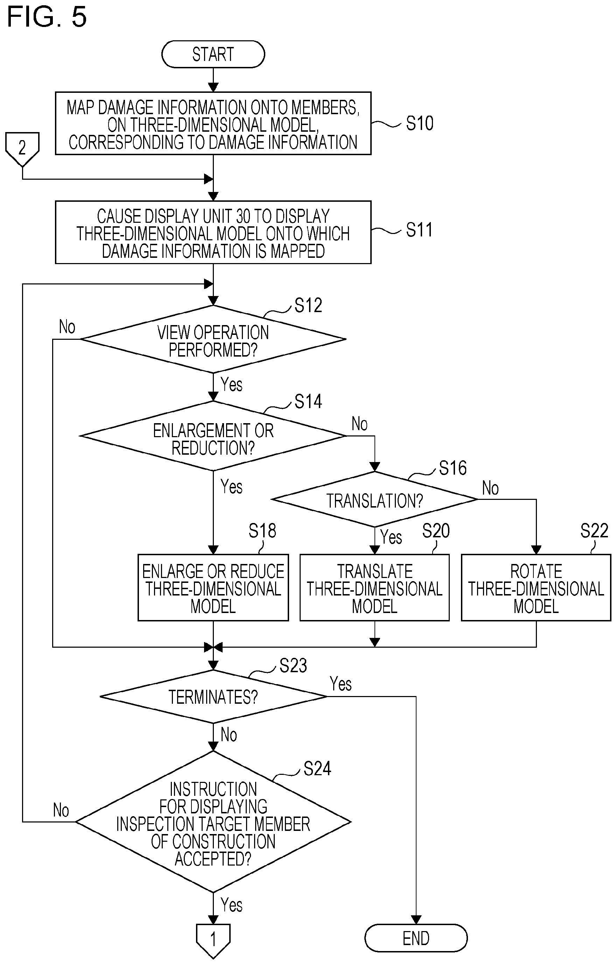

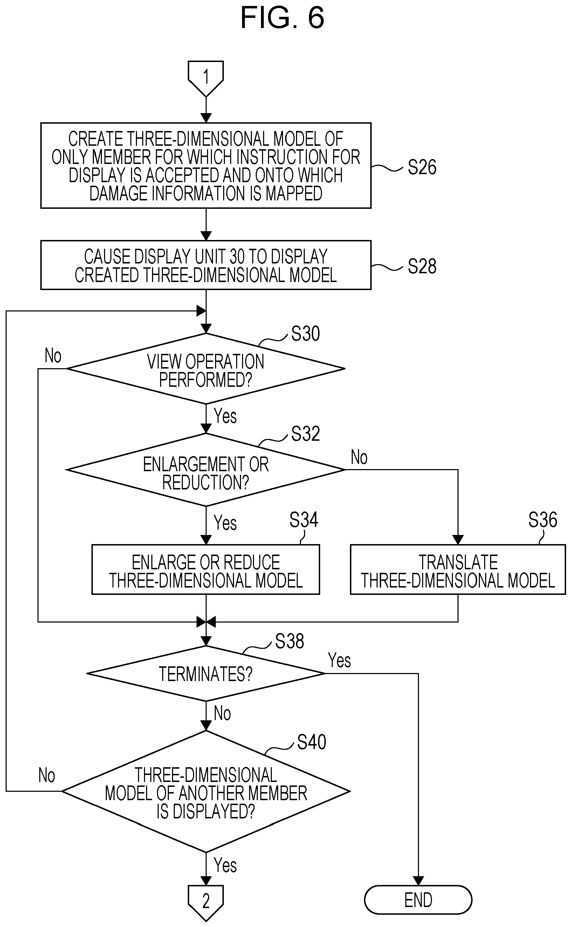

Fig. 5 and Fig. 6 illustrate a flowchart of an embodiment of the three-dimensional display method according to the present invention.

With reference to Fig. 5 and Fig. 6, the three-dimensional display method according to the present invention will be described while describing operations of the units of the three-dimensional display device 10 illustrated in Fig. 1.

In the storage unit 16 of the three-dimensional display device 10, a three-dimensional model of a construction (in this example, a bridge) and pieces of damage information associated with members of the construction are stored. To perform the three-dimensional display method of this example, the storage unit 16 that stores the above-described information is preferably prepared in advance.

The CPU 20 of the three-dimensional display device 10, the three-dimensional display program stored in the storage unit 16, the RAM 22 and the ROM 24, the display control unit 26, and so on constitute the processor, and the processor performs various processes described below.

The processor reads the three-dimensional model and the pieces of damage information from the storage unit 16 and performs a damage information mapping process of mapping the pieces of damage information onto members, on the three-dimensional model, corresponding to the pieces of damage information (step S10). Accordingly, the three-dimensional model onto which damage diagrams that are the pieces of damage information are mapped is created. When the degrees of damage are included in a piece of damage information, for example, the damage diagram in which the degrees of damage are colorcoded can be created.

The three-dimensional model of this example is a three-dimensional model obtained by texture mapping in which images obtained by image capturing of the construction are mapped onto the polygons of the three-dimensional polygon model, and the damage diagrams created on the basis of the captured images can be mapped onto the three-dimensional model similarly to the mapping of the images.

Subsequently, the processor causes the display unit 30 to display the three-dimensional model onto which the pieces of damage information are mapped (step S11). Here, in a case where the processor causes the display unit 30 to display the three-dimensional model for the first time, the processor preferably causes the three-dimensional model that represents an overall view of the bridge 1 to be displayed on the screen 30A of the display unit 30 such that the user can grasp the entire bridge 1 that is the construction, as illustrated in Fig. 3. Note that the three-dimensional model that represents an overall view of the bridge 1 illustrated in Fig. 3 is reduced to a large degree, and therefore, the user is hardly able to visually recognize the pieces of damage information mapped onto the three-dimensional model.

Next, the processor determines whether a view operation is performed by the user for the three-dimensional model displayed on the screen 30A (step S12). The view operation is an operation for enlarging and displaying the three-dimensional model expressed in three dimensions (3D) on the screen 30A, reducing and displaying the three-dimensional model, translating the three-dimensional model, or rotating the three-dimensional model and is performed by using the operation unit 18. In this case, although a 3D mouse is suitable as the operation unit that accepts the view operation by the user, a usual mouse or the like can be used.

If it is determined in step S12 that a view operation is performed (in the case of "Yes"), the processor determines whether the view operation is an operation for enlarging or reducing the three-dimensional model, an operation for translating the three-dimensional model, or an operation for rotating the three-dimensional model (step S14 and step S16).

If a view operation for enlarging or reducing the three-dimensional model is performed by using the operation unit 18, the processor creates display data in which the three-dimensional model is enlarged or reduced in accordance with an instruction for enlargement or reduction given by the view operation and outputs the display data to the display unit 30 (step S18). If a view operation for translating the three-dimensional model is performed by using the operation unit 18, the processor creates display data in which the three-dimensional model is translated in accordance with an instruction for translation given by the view operation and outputs the display data to the display unit 30 (step S20), and if a view operation for rotating the three-dimensional model is performed by using the operation unit 18, the processor creates display data in which the three-dimensional model is rotated in accordance with an instruction for rotation given by the view operation and outputs the display data to the display unit 30 (step S22).

If it is determined in step S12 that a view operation is not performed (in the case of "No") or when the process in step S18, S20, or S22 ends, the flow proceeds to step S23.

In step S23, the processor determines whether an instruction for terminating display of the three-dimensional model from the operation unit 18 is input, and if an instruction for termination is not input (in the case of "No"), the flow proceeds to step S24, and if an instruction for termination is input (in the case of "Yes"), display of the three-dimensional model is terminated.

Next, the processor determines whether an instruction for displaying a member (specific inspection target member) of the construction is accepted from the operation unit 18 that functions as the user interface (performs an acceptance process) (step S24).

The acceptance process of accepting a displayed member of the construction by using the operation unit 18 can be performed as follows.

For example, the processor displays the 26 types of damage to the construction illustrated in Fig. 2 on a sub-screen or a separate screen of the display unit 30. When the user selects target damage by using the operation unit 18, the processor specifies a member related to the selected damage with reference to the table illustrated in Fig. 2 and accepts the member as a member to be displayed three-dimensionally.

For example, when at least one of "cracks", "peeling/exposure of reinforcing rods", or "water leakage/free lime" is selected as damage, a concrete member is specified. In the case of the bridge 1 of this example, the floor slab 6 (Fig. 4) is a concrete member, and therefore, the floor slab 6 is specified.
When at least one of "corrosion", "fractures", or "ruptures" is selected as damage, a steel member of the construction is specified. In the case of the bridge 1 of this example, the main girders 2, the cross girders 3, the sway bracing 4, and the lateral bracing 5 (Fig. 4) are steel members, and therefore, these members are specified.

When "peeling/exposure of reinforcing rods" is selected, among floor slabs, a floor slab having damage information "peeling/exposure of reinforcing rods" is preferably specified. In this case, when information about the type of damage is included in the damage information in addition to the damage diagram, the information about the type of damage can be utilized.

In addition to the above-described examples, one or two or more members may be directly selected from among the members that constitute the construction (bridge 1) by using the operation unit 18.

For example, Fig. 4 illustrates a cursor 32 that indicates an input position on the screen 30A of the display unit 30, and the cursor 32 can move on the screen 30A in response to an operation of the operation unit 18 (a pointing device, such as a mouse).

When the user wants to check damage to a desired inspection target member of the bridge, the user moves the three-dimensional model three-dimensionally while grasping the enter bridge in space with the three-dimensional model to search for the desired inspection target member on the screen 30A of the display unit 30. On the screen 30A of the display unit 30, the user moves the cursor 32 onto the display region of the desired member and performs an input operation by a click operation using a mouse or by using an execution key. Accordingly, a position on the three-dimensional model displayed on the screen 30A of the display unit 30 can be specified with the operation unit 18, and a member corresponding to the specified position can be accepted.

In Fig. 4, the cursor 32 is positioned on a specific panel included in the floor slab 6 of the bridge 1. When, for example, a click operation using a mouse is performed at this time, the processor can accept an instruction for displaying the floor slab 6 of the bridge 1 or the specific panel included in the floor slab 6. When a desired member is thus selected, a mark 34 indicating that selection has been made is preferably superimposed and displayed at the position indicated by the cursor 32 on the three-dimensional model.

If an instruction for displaying an inspection target member of the construction is accepted in step S24 (in the case of "Yes"), the flow proceeds to step S26 in Fig. 6, and if an instruction for displaying an inspection target member is not accepted (in the case of "No"), the flow returns to step S12.

In step S26 in Fig. 6, the processor creates a three-dimensional model of only the member for which the instruction for display is accepted (the member onto which damage information is mapped) (step S26).

At this time, the processor needs to distinguish, in the three-dimensional model, a three-dimensional model corresponding to the member for which the instruction for display is accepted and a three-dimensional model corresponding to the other members from each other. The processor preferably performs a member recognition process of recognizing each member that constitutes the construction on the basis of the three-dimensional model. The member recognition process can be performed by using AI.

Further, the three-dimensional model may be configured such that a portion, of the three-dimensional model, corresponding to each member and a member number indicating to which member of the construction the portion corresponds are associated in advance with each other.

The processor performs a display process of causing the display unit 30 to display the three-dimensional model, created in step S26, of only the member for which the instruction for display is accepted and onto which damage information is mapped (step S28).

In the display process in step S28, when the three-dimensional model of the member for which the instruction for display is accepted and onto which the damage information is mapped is displayed, the three-dimensional model is displayed on the screen of the display unit 30 while making the line-of-sight direction coincide with a direction normal to the surface of the member. Accordingly, the user can visually recognize the surface of the inspection target member of the construction from the front and can grasp the damage information mapped onto the surface of the member more accurately.

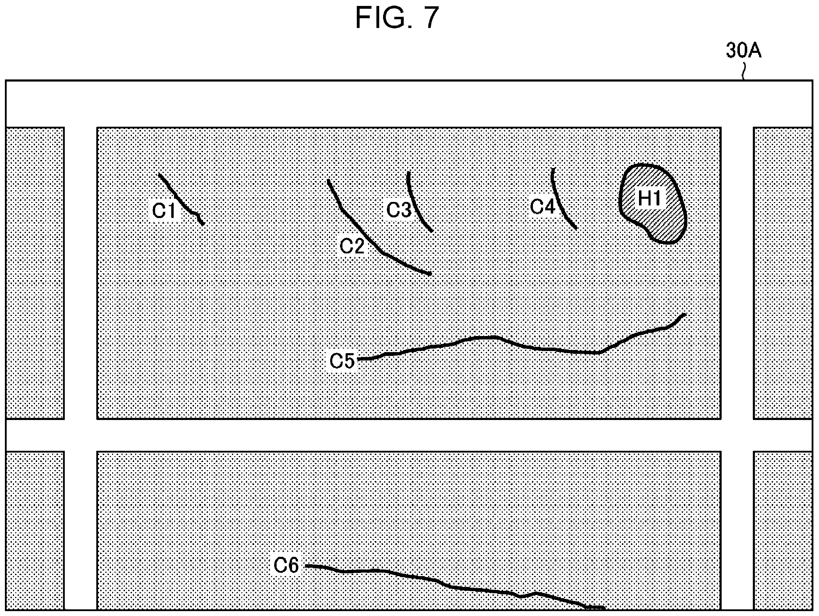

Fig. 7 is a diagram illustrating an example screen of the display unit that displays a three-dimensional model of a floor slab onto which a damage diagram is mapped.

As illustrated in Fig. 7, the three-dimensional model of only the floor slab onto which the damage diagram is mapped is displayed on the screen 30A of the display unit 30.

In Fig. 7, a plurality of panels (including partial panels) that constitute the floor slab are displayed, and six cracks C1 to C6 and concrete peeling/exposure of reinforcing rods HI are illustrated as the damage diagram. The crack C6 is a crack in a panel positioned below in Fig. 7 and adjacent to a panel having the cracks C1 to C5.

Captured images are mapped onto the three-dimensional model of the panels of the floor slab, and the damage diagram is mapped onto the images. The processor preferably displays or hides the damage diagram in accordance with an instruction from the user. This is because when the user checks damage on the images, the user may want to hide the damage diagram.

Next, the processor determines whether a view operation is performed by the user for the three-dimensional model of only the member displayed in step S28, onto which the damage information is mapped (step S30).

The view operation performed at this time is an operation for enlarging and displaying, reducing and displaying, or translating the three-dimensional model of only the member onto which the damage information is mapped. In this example, the line-of-sight direction is made to coincide with the direction normal to the surface of the member, and therefore, a view operation for rotating the three-dimensional model is not included.

If it is determined in step S30 that a view operation is performed (in the case of "Yes"), the processor determines whether the view operation is an operation for enlarging or reducing the three-dimensional model or an operation for translating the three-dimensional model (step S32).

If a view operation for enlarging or reducing the three-dimensional model is performed by using the operation unit 18, the processor creates display data in which the three-dimensional model is enlarged or reduced in accordance with an instruction for enlargement or reduction given by the view operation and outputs the display data to the display unit 30 (step S34). If a view operation for translating the three-dimensional model is performed by using the operation unit 18, the processor creates display data in which the three-dimensional model is translated in accordance with an instruction for translation given by the view operation and outputs the display data to the display unit 30 (step S36).

If it is determined in step S30 that a view operation is not performed (in the case of "No") or when the process in step S34 or S36 ends, the flow proceeds to step S38.

In step S38, the processor determines whether an instruction for terminating display of the three-dimensional model from the operation unit 18 is input, and if an instruction for termination is not input (in the case of "No"), the flow proceeds to step S40, and if an instruction for termination is input (in the case of "Yes"), display of the three-dimensional model is terminated.

In step S40, the processor determines whether to display a three-dimensional model of a member other than the member for which the three-dimensional model is currently displayed, on the basis of an instruction input from the user.

If an instruction for displaying a three-dimensional model of another member is not input (in the case of "No"), the flow returns to step S30, and if an instruction for displaying a three-dimensional model of another member is input (in the case of "Yes"), the flow returns to step S11 in Fig. 5.

### Modifications of Embodiment

In the embodiment illustrated in Fig. 5 and Fig. 6, an instruction for displaying an inspection target member of the construction is accepted, and a three-dimensional model of only the member for which the instruction for display is accepted and onto which damage information is mapped is displayed on the display unit. In contrast, an instruction for hiding a desired member of the construction may be accepted, and a three-dimensional model of a member of the construction, onto which damage information is mapped, except the member for which the instruction for hiding is accepted may be displayed on the display unit.

For example, when the user wants to check damage to the floor slab 6 of the bridge 1, a portion of the floor slab 6 may be hidden behind the cross girders 3, the sway bracing 4, and the lateral bracing 5 that are present nearer than the floor slab 6 (on the viewpoint side) and may be difficult to be checked. In this case, the three-dimensional model of members including the cross girders 3, the sway bracing 4, and the lateral bracing 5 is hidden.

That is, instead of step S24 illustrated in Fig. 5, the processor determines whether an instruction for hiding a desired member (a member that obstructs visual recognition of a specific inspection target member) of the construction is accepted from the operation unit 18 that functions as the user interface (performs an acceptance process).

If the processor accepts an instruction for hiding a desired member of the construction from the operation unit 18, instead of step S26 illustrated in Fig. 6, the processor creates a three-dimensional model of a member of the construction, onto which damage information is mapped, except the member for which the instruction for hiding is accepted.

The process in the steps other than step S24 and step S26 described above is as in the embodiment illustrated in Fig. 5 and Fig. 6, and therefore, a detailed description thereof will be omitted.

When the three-dimensional model of a member of the construction except the member for which the instruction for hiding is accepted is displayed on the display unit for the first time, the three-dimensional model is preferably displayed while making the line-of-sight direction coincide with a direction normal to the surface of the member, in which the entire member can be visually recognized as a result of removal of the member for which the instruction for hiding is accepted.

### Others

In the present embodiment, the three-dimensional model is configured by texture mapping in which images obtained by image capturing of the construction are mapped onto the polygons of the three-dimensional polygon model of the construction. However, the present embodiment is not limited to this, and the three-dimensional model may be a three-dimensional point cloud model represented by a three-dimensional point cloud of a large number of points on the surface of the construction or a three-dimensional model representing the surface of the construction by an aggregate of polygons created on the basis of the three-dimensional point cloud model.

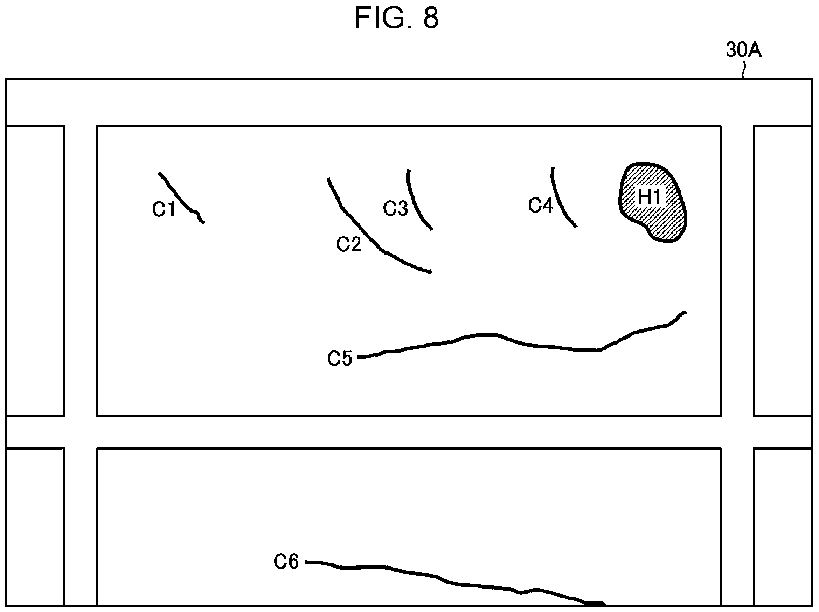

Fig. 8 is a diagram illustrating an example screen of the display unit that displays the three-dimensional model of the floor slab onto which the damage diagram is mapped and which represents the surface of the construction by an aggregate of polygons.

That is, although texture mapping of the captured images is performed onto the three-dimensional model illustrated in Fig. 7, texture mapping of the captured images is not performed onto the three-dimensional model displayed on the screen 30A of the display unit 30 illustrated in Fig. 8 and only the damage diagram is mapped.

In the embodiment illustrated in Fig. 5 and Fig. 6, when the three-dimensional model of only the member for which an instruction for display is accepted and onto which damage information is mapped is displayed, the three-dimensional model is displayed while the line-of-sight direction is made to coincide with the direction normal to the surface of the member, and thereafter, a view operation for only enlarging/reducing or translating the displayed three-dimensional model is accepted. However, a view operation for rotation may be accepted. When the three-dimensional model of only the member for which an instruction for display is accepted and onto which damage information is mapped is displayed for the first time, the three-dimensional model might not be displayed with the line-of-sight direction coinciding with the direction normal to the surface of the member.

The three-dimensional model of the construction and the pieces of damage information associated with members of the construction, which are stored in the storage unit 16, need not be generated by the three-dimensional display device 10 and may be generated by an external device. In this case, a three-dimensional model and pieces of damage information associated with members of the construction generated by the external device are stored in the storage unit 16.

The three-dimensional model is not limited to that generated by using the group of captured images obtained by image capturing of the construction and with the SfM technique and may be generated with a variety of methods.

For example, a three-dimensional model of a construction can be generated by obtaining a captured image of the construction with a time-of-flight camera and obtaining three-dimensional coordinates of the construction corresponding to each pixel on the captured image. Further, a laser scanner that includes a camera function can be included, and a three-dimensional model of a construction can be generated on the basis of three-dimensional information of the construction obtained by the laser scanner.

The hardware for implementing the three-dimensional display device according to the present invention can be configured as various processors. The various processors include a CPU (central processing unit), which is a general-purpose processor executing a program to function as various processing units, a programmable logic device (PLD), such as an FPGA (field-programmable gate array), which is a processor having a circuit configuration that is changeable after manufacture, and a dedicated electric circuit, such as an ASIC (applicationspecific integrated circuit), which is a processor having a circuit configuration specifically designed to perform specific processing. One processing unit that constitutes the three-dimensional display device may be configured as one of the various processors described above or two or more processors of the same type or different types. For example, one processing unit may be configured as a plurality of FPGAs or a combination of a CPU and an FPGA. Further, a plurality of processing units may be configured as one processor. As the first example of configuring a plurality of processing units as one processor, a form is possible where one or more CPUs and software are combined to configure one processor, and the processor functions as the plurality of processing units, a representative example of which is a computer, such as a client or a server. As the second example thereof, a form is possible where a processor is used in which the functions of the entire system including the plurality of processing units are implemented as one IC (integrated circuit) chip, a representative example of which is a system on chip (SoC). As described above, regarding the hardware configuration, the various processing units are configured by using one or more of the various processors described above. Further, the hardware configuration of the various processors is more specifically an electric circuit (circuitry) in which circuit elements, such as semiconductor elements, are combined.

Further, the present invention includes a three-dimensional display program that is installed in a computer capable of accessing a memory storing a three-dimensional model of a construction and pieces of damage information associated with members of the construction and that causes the computer to function as the three-dimensional display device according to the present invention, and a storage medium to which the three-dimensional display program is recorded.

Further, the present invention is not limited to the above-described embodiment and various modifications can be made without departing from the spirit of the present invention as a matter of course.

### Reference Signs List

- 1: bridge
- 2: main girder
- 3: cross girder
- 4: sway bracing
- 5: lateral bracing
- 6: floor slab
- 7: pier
- 10: three-dimensional display device
- 12: image obtaining unit
- 14: image database
- 16: storage unit
- 18: operation unit
- 20: CPU
- 22: RAM
- 24: ROM
- 26: display control unit
- 30: display unit
- 30A: screen
- 32: cursor
- 34: mark
- C1 to C6: crack
- H1: peeling/exposure of reinforcing rods
- S10 to S40: step

## Claims

1. A three-dimensional display device comprising: a processor; and a memory configured to store a three-dimensional model of a construction and pieces of damage information associated with members of the construction,
the processor being configured to
map the pieces of damage information stored in the memory onto members, on the three-dimensional model stored in the memory, corresponding to the pieces of damage information,
accept from a user interface, an instruction for displaying or hiding a member of the construction, and
cause, when accepting an instruction for displaying an inspection target member of the construction from the user interface, a display to display the three-dimensional model of only the member for which the instruction for displaying is accepted and onto which a piece of damage information is mapped, or cause, when accepting an instruction for hiding a desired member of the construction from the user interface, the display to display the three-dimensional model of a member of the construction, onto which a piece of damage information is mapped, except the member for which the instruction for hiding is accepted.

2. The three-dimensional display device according to claim 1, wherein
the three-dimensional model is a three-dimensional point cloud model, a three-dimensional polygon model created on the basis of the three-dimensional point cloud model, or a three-dimensional model obtained by texture mapping in which images obtained by image capturing of the construction are mapped onto polygons of the three-dimensional polygon model.

3. The three-dimensional display device according to claim 1 or 2, wherein
the processor is configured to recognize members that constitute the construction on the basis of the three-dimensional model.

4. The three-dimensional display device according to any one of claims 1 to 3, wherein
the memory is configured to store a table that shows relationships between members of the construction and damage that is likely to occur in the members, and
the processor is configured to specify, when accepting from the user interface, selection of a type of damage among a plurality of types of damage to the construction, a member corresponding to the selected type of damage with reference to the table, and accept display of the specified member.

5. The three-dimensional display device according to any one of claims 1 to 4, wherein
the processor is configured to cause the display to display the three-dimensional model of the members onto which the pieces of damage information are mapped, and
the processor is configured to accept an instruction for displaying an inspection target member of the construction or an instruction for hiding a desired member of the construction, the inspection target member and the desired member being specified with a pointing device on the display on which the three-dimensional model is displayed.

6. The three-dimensional display device according to any one of claims 1 to 5, wherein
the processor is configured to cause, when accepting the instruction for displaying the inspection target member of the construction from the user interface, the display to display the three-dimensional model while making a line-of-sight direction coincide with a direction normal to a surface of the member.

7. The three-dimensional display device according to any one of claims 1 to 6, wherein
each of the pieces of damage information is a damage diagram showing a position or a region of damage.

8. The three-dimensional display device according to any one of claims 1 to 7, wherein
damage to a concrete member of the construction includes at least one of a crack, peeling/exposure of reinforcing rods, or water leakage/free lime, and damage to a steel member of the construction includes at least one of corrosion, a fracture, or a rupture.

9. A three-dimensional display method for a processor to cause a display to display a three-dimensional model of a construction,
processes to be performed by the processor comprising:
a step of obtaining from a memory configured to store the three-dimensional model of the construction and pieces of damage information associated with members of the construction, the three-dimensional model and the pieces of damage information;
a step of mapping the obtained pieces of damage information onto members, on the three-dimensional model, corresponding to the pieces of damage information;
a step of accepting from a user interface, an instruction for displaying or hiding a member of the construction; and
a step of causing, when accepting an instruction for displaying an inspection target member of the construction from the user interface, the display to display the three-dimensional model of only the member for which the instruction for displaying is accepted and onto which a piece of damage information is mapped, or causing, when accepting an instruction for hiding a desired member of the construction from the user interface, the display to display the three-dimensional model of a member of the construction, onto which a piece of damage information is mapped, except the member for which the instruction for hiding is accepted.

10. A three-dimensional display program for causing a computer to perform a three-dimensional display method for displaying a three-dimensional model of a construction on a display, the three-dimensional display method comprising:
a step of obtaining from a memory configured to store the three-dimensional model of the construction and pieces of damage information associated with members of the construction, the three-dimensional model and the pieces of damage information;
a step of mapping the obtained pieces of damage information onto members, on the three-dimensional model, corresponding to the pieces of damage information;
a step of accepting from a user interface, an instruction for displaying or hiding a member of the construction; and
a step of causing, when accepting an instruction for displaying an inspection target member of the construction from the user interface, the display to display the three-dimensional model of only the member for which the instruction for displaying is accepted and onto which a piece of damage information is mapped, or causing, when accepting an instruction for hiding a desired member of the construction from the user interface, the display to display the three-dimensional model of a member of the construction, onto which a piece of damage information is mapped, except the member for which the instruction for hiding is accepted.
